# EUROPÄISCHE PATENTSCHRIFT

(11) **EP 0 312 117 B1**
(45) Veröffentlichungstag und Bekanntmachung des Hinweises auf die Patenterteilung: **14.12.1994**
(21) Anmeldenummer: 88117237.3
(22) Anmeldetag: 17.10.1988
(51) Int. Cl.: G02B 27/00

(54) **Anzeigevorrichtung für Kraftfahrzeuge**
Vehicle head-up display
Système de visualisation à tête haute pour véhicules

(30) Priorität: 16.10.1987 DE 3735125
(43) Veröffentlichungstag der Anmeldung: 19.04.1989
(73) Patentinhaber: Bayerische Motoren Werke Aktiengesellschaft, 80788 München (DE)
(72) Erfinder: Jost, Michael, D-8044 Unterschleissheim (DE); Weishaupt, Walter, D-8000 München 60 (DE)

(56) Entgegenhaltungen:
- EP-A- 0 202 460
- EP-A- 0 229 876
- US-A- 3 715 721
- US-A- 3 848 974
- US-A- 3 951 553
- US-A- 4 740 780
- IBM TECHNICAL DISCLOSURE BULLETIN, Band 25, Nr. 12, Mai 1983, Seiten 6373-6374,New York, US; J.E.R. YOUNG: "Head-mounted display"

## Beschreibung

Die Erfindung bezieht sich auf eine Anzeigevorrichtung nach dem Oberbegriff des Patentanspruchs 1.

Aus der EP-A-0 229 876 ist eine entsprechende Anzeigevorrichtung in Form eines Head-Up-Displays bekannt. Bei der geometrischen Figur, die erzeugt und über die Windschutzcheibe in das Auge des Fahrzeugbenutzers eingespiegelt wird, handelt es sich beispielsweise um die Anzeige eines Geschwindigkeitswerts. Zur Bilderzeugung dienen LED's oder eine mittels LCD hellgetastete Bildfläche.

Aus der DE-PS 33 28 226 ist es ferner bekannt, einen querliegenden Balken als geometrische Figur in das Blickfeld einzuspiegeln. Der Balken markiert den Sicherheitsabstand und kann fahrzeuggeschwindigkeitsabhängig veränderlich dargestellt werden.

Der Stand der Technik ist in seinen Anwendungsmöglichkeiten auf Linien oder Zahlenwerte als geometrischen Figuren beschränkt und daher in nur sehr begrenzten Maße in der Lage, eine flexible Information unter verschiedenen Verkehrssituationen zu liefern.

Der Erfindung liegt die Aufgabe zugrunde, eine Anzeigevorrichtung der eingangs genannten Art zu schaffen, die Darstellung einer Vielzahl von geometrischen Figuren entsprechend der für die jeweilige Fahrstituation erforderlichen Information liefert.

Die Erfindung löst diese Aufgabe durch die kennzeichnenden Merkmale des Patentanspruchs 1.

Durch die Möglichkeit, ein komplettes Feld in das Blickfeld des Fahrzeugbenutzers einzuspiegeln, ergibt sich eine Vielzahl von Möglichkeiten der Information. So kann beispielsweise wie an sich bekannt eine linienförmige Information in Form eines waagrechten Balkens oder einer senkrechten Linie dargestellt werden. Es kann aber auch ein Piktogramm eines Kraftfahrzeugs in Heckansicht dargestellt werden. Die Figur kann sich entsprechend den tatsächlichen Verkehrsverhältnissen innerhalb des Feldes bewegen und somit plastisch beispielsweise die Annäherung an ein beispielsweise infolge Nebels nicht sichtbares Kraftfahrzeug darstellen. Ebenso können Unregelmäßigkeiten des Straßenverlaufs und ihre Veränderung entsprechend der Bewegung des Kraftfahrzeugs angezeigt werden. Weitere Möglichkeiten bestehen darin, ein sich auf den Fahrzeugbenutzer scheinbar zubewegendes Warnsymbol darzustellen.

Für die Darstellung der geometrischen Figuren ist es lediglich erforderlich, die Lichtpunkte hell zu tasten, aus denen die Figur zusammengesetzt ist. Es ist ohne weiteres erkennbar, daß der gesamte schaltungstgechnische und ggf. auch rechnerische Aufwand gering gehalten werden kann. Entsprechendes gilt für die konstruktive Seite. Bei den Lichtpunkten kann es sich beispielsweise um Glühlampen oder LED's handeln, die kostenmäßig besonders günstig sind.

Durch die konstruktive Anordnung der Lichtpunkte in der Oberfläche des Armaturenbretts wird ein virtuelles Bild der geometrischen Figur erzeugt. Dieses scheint in einiger Entfernung im Blickfeld des Fahrzeugbenutzers vor der Windschutzscheibe zu liegen. Dies führt zu einer Plastizität der Information. Dies wird ohne besondere optische Mittel, wie Abbildungslinsen oder holographisch-optische Elemente erreicht.

Eine Verbesserung der Erfindung beschäftigt sich damit, die Plastizität der Information deutlich zu steigern. Dies wird erreicht durch die Mittel des Patentanspruchs 2. Damit wird eine wirklichkeitsgetreue zusätzliche Information über die Lage der hellgetasteten Feldpunkte erzielt. Gerade dann, wenn eine Bewegung der Figur innerhalb des Feldes simuliert werden soll, wird der räumliche Eindruck deutlich gesteigert. Eine Figur, beispielsweise das Piktogramm eines Kraftfahrzeugs in größerer Entfernung, d.h. beispielsweise am Rande des Feldes leuchtet schwächer als das Piktogramm dieses Kraftfahrzeugs, wenn es sich in der Nähe befindet. Die Veränderung der Helligkeit der Figur geht einher mit der Veränderung der Größe der Figur und führt ggf. in Verbindung mit der Veränderung der Größe der Feldpunkte zu einer signifikanten Steigerung des Warn- oder Hinweischarakters.

Trotz der möglichen Vielzahl der darstellbaren geometrischen Figuren wird durch die Mittel, die im Patentanspruch 3 angegeben sind, eine Beeinflussung und Störung anderer Fahrzeuginsassen sowie von Verkehrsteilnehmern außerhalb des Kraftfahrzeugs vermieden. Die kleine Apertur der Lichtquellen führt zu einer Konzentration des von den Lichtquellen ausgehenden Lichtes auf den Fahrzeugbenutzer zu und vermeidet weitgehend Streulicht. Im Idealfall nehmen die anderen Fahrzeuginsassen die geometrische Figur überhaupt nicht wahr.

Durch die Mittel, die im Patentanspruch 4 angegeben sind, wird die Anzeigevorrichtung blendfrei gehalten. Auch dann, wenn keine der Lichtquellen eingeschaltet ist, führt auftreffendes Fremdlicht nicht zu störenden Reflexen. Derartige Reflexe würden ansonsten über die Windschutzscheibe in das Sichtfeld der Fahrzeugbenutzer eingespiegelt werden.

Eine mattierte Folie, sofern sie auch im Bereich des Austrittskegels der Lichtquellen vorhanden ist, führt zwangsläufig zu einer Vergrößerung der Apertur der Lichtquellen. Um diesen unerwünschten Effekt möglichst gering zu halten, können die Mittel vorgesehen sein, die im Patentanspruch 5 angegeben sind. Somit beschränkt sich die Mattierung nur auf die Oberseite der Folie und führt nur dort lokal zu einer Vergrößerung der Apertur.

Die Erfindung ist anhand eines in der Zeichnung dargestellten Ausführungsbeispiels beschrieben. Es zeigt
- Fig. 1: die Seitenansicht eines Kraftfahrzeugs mit dem schematischen Strahlengang einer erfindungsgemäßen Anzeigevorrichtung
- Fig. 2: einen Ausschnitt von Fig. 1
- Fig. 3: einen Ausschnitt von Fig. 2 im Detail und
- Fig. 4: eine Draufsicht auf die Anzeigevorrichtung in schematischer Darstellung.

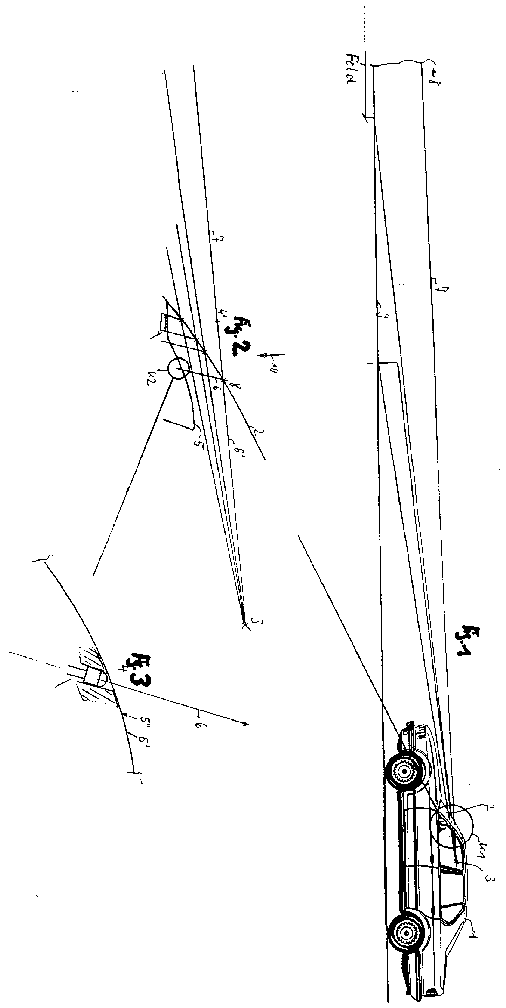

In Fig. 1 ist ein Kraftfahrzeug 1 in Seitenansicht zu erkennen. Darin wird mit Hilfe der erfindungsgemäßen Anzeigevorrichtung eine geometrische Figur über die Windschutzscheibe 2 in das Blickfeld des nicht dargestellten Fahrzeugbenutzers eingespielt. Der Fahrzeugbenutzer besitzt einen durch ein Kreuz gekennzeichneten Augpunkt 3, der sich als geometrische Mitte zwischen den beiden Augen ergibt.

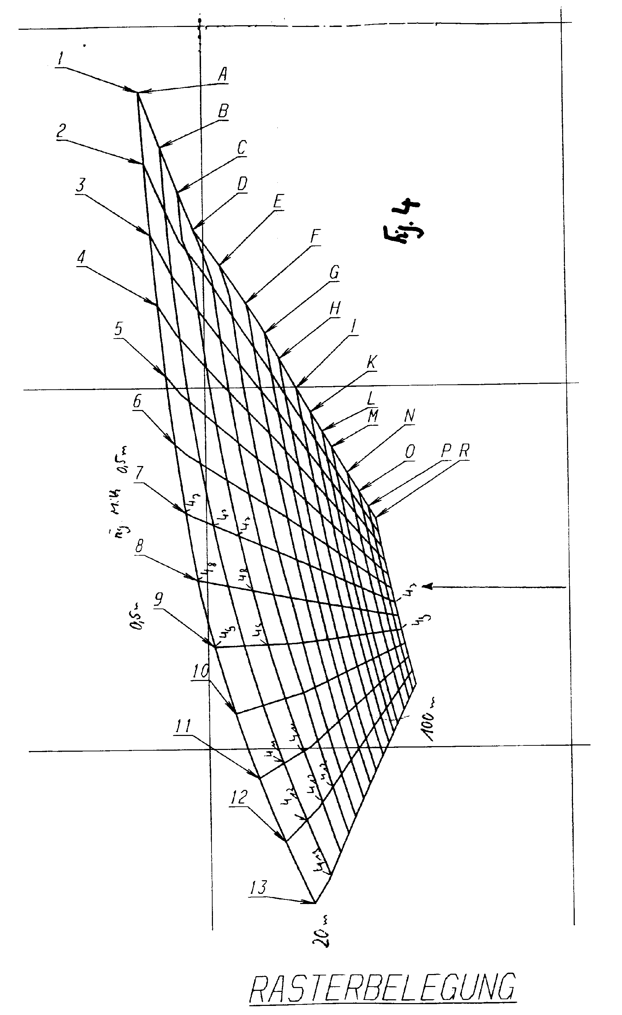

Die geometrische Figur wird mit Hilfe von Leuchtdioden 4 erzeugt, die in der Oberfläche des Armaturenbretts 5 unter einer auf ihrer Oberseite 5˝ mattierten, ansonsten klaren Folie 5′ angeordnet sind. Dies ist im Detail in Fig. 3 dargestellt. Dabei stellt Fig. 3 vergrößert den durch einen Kreis K2 gekennzeichneten Ausschnitt von Fig. 2 dar. Fig. 2 wiederum ist der vergrößerte Ausschnitt von Fig. 1, der dort durch einen Kreis K 1 markiert ist.

Die in Fig. 3 stellvertretend für eine Vielzahl von Leuchtdioden gezeigte Leuchtdiode 4 besitzt eine möglichst geringe Apertur und sendet ihr Licht in Richtung ihrer Achse 6 aus. Diese Licht wird an der Windschutzscheibe 2 umgelenkt und fällt in den Augpunkt 3 des Fahrzeugbenutzers. Dabei ist die Ausrichtung der Leuchtdiode 4 so gewählt, daß der umgelenkte Strahl 6′ scheinbar von einem Ort 4′ ausgeht, der im Blickfeld des Fahrzeugbenutzers liegt. Die Verbindung zwischen dem Augpunkt 3 und dem Ort 4′ beschreibt einen Sehstrahl 7, der auf einen Feldpunkt 8 vor dem Kraftfahrzeug gerichtet ist. Die Anordnung sämtlicher Leuchtdioden und ihre Ausrichtung ist so gewählt, daß sämtliche Feldpunkte entsprechend dem Feldpunkt 8 ein Feld beschreiben, das beispielsweise einen Bereich von 20 bis 100 Meter vor dem Kraftfahrzeug mit einer Breite von beispielsweise 5 Metern beschreibt. Durch geeignete Auswahl der hellgetasteten Leuchtdioden kann auf diese Weise eine innerhalb des Feldes liegende geometrische Figur erzeugt werden. Durch Variation der hellgetasteten Leuchtdioden kann dabei die Bewegung dieser Figur innerhalb des Feldes simuliert werden.

Die geometrische Anordnung der Leuchtdioden, die das Feld beschreiben, ist in Fig. 4 gezeigt. Dem Feld ist eine Matrix aus Dioden zugeordnet, die in der Oberfläche des Armaturenbretts 4 liegt. Diese Dioden befinden sich an den Schnitt- und Eckpunkten des in Fig. 4 gezeigten Gitters, das die Projektion auf eine Ebene parallel zur Oberfläche 9 der Fahrbahn darstellt und einer Betrachtung des Armaturenbretts von oben durch die Windschutzscheibe 2 entspricht. Die Betrachtungsrichtung ist in Fig. 2 durch einen Pfeil 10 dargestellt.

An jedem der Eck- und Schnittpunkte des in Fig. 4 gezeigten Gitters sitzen somit Dioden 4. Dabei entsprechen die Dioden 4₈ den Feldpunkten, die genau in der Mitte des Feldes liegen. Die auf den benachbarten Linie angeordneten Dioden 4₉ und 4₇ entsprechend Feldlinien, die um jeweils 0,5 Meter parallel zu dieser Mitte verlaufen. Die in den daran anschließenden benachbarten Feldlinien liegenden Dioden 4₁₀ bis 4₁₃ und 4₆ bis 4₁ entsprechend wiederum Feldlinien, die jeweils einen Abstand von 0,5 Meter voneinander besitzen. Damit ergibt sich eine Breite des durch die Leuchtdioden 4₁ bis 4₁₃ beschriebenen Feldes von 5 Metern.

Entsprechend ist der Abstand der Leuchtdioden innerhalb eine Feldlinie, beispielsweise der Leuchtdioden 4₈ voneinander so gewählt, daß die gesamte Länge des Feldes, hier von 80 Metern gleichmäßig aufgeteilt wird. Wie dargestellt befinden sich innerhalb einer Feldlinie 16 Leuchtdioden. Daraus ergibt sich, daß die zugeordneten Feldpunkte einen durchschnittlichen Abstand von 5 Metern besitzen. Jedoch ist der tatsächliche Abstand für nahe Feldpunkte geringer, beispielsweise 3 Meter und für entfernte Feldpunkte größer, beispielsweise 8 Meter.

Durch entsprechende Ansteuerung mehrerer der Leuchtdioden ist es damit möglich, innerhalb des Feldes - scheinbar - eine geometrische Figur zu beschreiben und durch Veränderung der Ansteuerung, beispielsweise die Auswahl von benachbarten Leuchtdioden eine Bewegung der Figur zu simulieren. Auf das Kraftfahrzeug zukommende Hindernisse oder andere Kraftfahrzeuge können damit eindrucksvoll im Sichtfeld des Fahrzeugbenutzers dargestellt werden.

Der auf diese Weise erzielbare räumliche Eindruck wird somit ohne besondere optische Hilfsmittel, sondern lediglich durch die Kombination der geeigneten Anordnung von Leuchtdioden in der Oberfläche des Armaturenbretts 5, einer entsprechenden Auswahl der hellgetasteten Leuchtdioden und der Ausnutzung der Windschutzscheibe 2 als Reflexionskörper erzeugt.

Dieser räumliche Eindruck kann weiter verstärkt werden, wenn die Leuchtstärke unde/oder Größe der Leuchtdioden entsprechend der Lage des zugeordneten Feldpunktes innerhalb des Feldes variiert wird. Leuchtdioden, die in der der ersten, mit A bezeichneten Reihe liegen und der nächsten Begrenzung des Feldes mit einer Entfernung von 20 Metern entsprechen, werden dabei mit der größten Leuchtstärke versehen. Diese Leuchtstärke nimmt stufenweise für die folgenden mit B,C,D.... bezeichneten Leuchtdiodenreihen ab. Für die mit R bezeichnete Leuchtdiodenreihe ist sie am kleinsten. Diese Reihe entspricht der Begrenzung des Feldes die die größte Entfernung vom Kraftfahrzeug, hier: 100 Meter besitzt.

Damit wird es durch die zusätzliche, vorgegebene Leuchtstärke der Leuchtdioden möglich, die Annäherung an ein Hindernis nicht nur durch eine auf den Fahrzeugbenutzer hin gerichtete Bewegung der geometrischen Figur, sondern sie durch eine damit in Verbindung stehende Vergrößerung zur Helligkeit der Figur besonders deutlich zu machen. Damit wird eine besonders einprägsame Anzeigevorrichtung erzielt.

## Patentansprüche

1. Anzeigevorrichtung für Kraftfahrzeuge (1), mit der Anzeigeeinheit, die im Armaturenbrett (5) eines Kraftfahrzeugs (1) angeordnet ist, und die aus einer Vielzahl von voneinander getrennten Einzeil-Lichtquellen (4₁, 4₂, 4₃, ....) besteht, die ein Raster bilden, und die über die Windschutzscheibe (2) in das Blickfeld eines Fahrzeugbenutzers eingespiegelt werden, wobei die Lage der Einzel-Lichtquellen (4₁, 4₂, 4₃, ....) so gewählt ist, daß die Verlängerungen der vom Auge (3) des Fahrzeugbenutzers ausgehenden und durch die jeweiligen Umlenkpunkte an der Windschutzscheibe (2) bestimmten Sehstrahlen (7) ein vor dem Kraftfahrzeug (1) liegendes, durch die Einzel-Lichtquellen (4₁, 4₂, 4₃ ...) bestehendes Rasterfeld beschreiben, und mit Mitteln zur geeigneten Auswahl der hellgetasteten Lichtquellen (4₁, 4₂, 4₃, ....), um eine innerhalb des Rasterfeldes liegende geometrische Figur zu erzeugen, dadurch gekennzeichnet, daß die Lichtquellen (4₁, 4₂, 4₃, ....) in der Oberfläche des Armaturenbretts (5) liegen, und daß die Lage der Lichtquellen (4₁, 4₂, 4₃, ....) relativ zueinander so gewahlt ist, daß der Fahrzeugbenutzer den Eindruck hat, daß das Rasterfeld sich in Richtung weg vom Kraftfahrzeug (1) erstreckt.

2. Anzeigevorrichtung nach Anspruch 1, dadurch gekennzeichnet, daß durch Variation der hellgetasteten Lichtquellen (4₁, 4₂, 4₃, ....) eine Bewegung der Figur innerhalb des Feldes simuliert ist.

3. Anzeigevorrichtung nach Anspruch 1 oder 2, dadurch gekennzeichnet, daß die Lichtquellen (4₁, 4₂, 4₃, ....) für Feldpunkte in größerer Entfernung eine geringere Lichtstärke und/oder -größe als für Feldpunkte in Kleinerer Entfernung besitzen.

4. Anzeigevorrichtung nach einem der Ansprüche 1 bis 3, dadurch gekennzeichnet, daß die Lichtquellen (4₁, 4₂, 4₃, ...) durch eine auf ihrer Oberseite mattierte Folie (5′) abgedeckt sind.

5. Anzeigevorrichtung nach Anspruch 4, dadurch gekennzeichnet, daß die Folie (5′) auf ihrer Unterseite klar ist.

## Claims

1. A display device for motor vehicles (1), comprising a display unit which is arranged in the dashboard (5) of a motor vehicle and which includes a plurality of individual light sources (4₁, 4₂ ,4₃, ....) which are separated from each other to form a grid and which are reflected via the windscreen (2) into the field of vision of a vehicle user, wherein the position of the individual light sources (4₁, 4₂, 4₃, ....) is selected such that the extensions of the visual rays (7) emerging from the eye (3) of the vehicle user and determined by the respective deflection points on the windscreen (2) describe a grid field lying in front of the vehicle (1) and created through the individual light sources (4₁, 4₂, 4₃, ....), there being means for the suitable selection of the intensity-modulated light sources (4₁, 4₂, 4₃, ....) in order to produce a geometric figure lying within the grid field, characterised in that the light sources (4₁, 4₂, 4₃, ....) lie in the surface of the dashboard (5) and that the position of the light sources (4₁, 4₂, 4₃, ....) relative to each other is selected such that the vehicle user has the impression that the grid field extends in a direction away from the motor vehicle (1).

2. A display device according to Claim 1, characterised in that, through variation of the intensity-modulated light sources (4₁, 4₂, 4₃, ....), a movement of the figure is simulated within the field.

3. A display device according to Claim 1 or 2, characterised in that the light sources (4₁, 4₂, 4₃, ....) for field points at a greater distance have a lower light intensity and/or extent than for field points at a smaller distance.

4. A display device according to any one of Claims 1 to 3, characterised in that the light sources (4₁, 4₂, 4₃, ....) are covered by a film (5') which is matted on its upper side.

5. A display device according to Claim 4, chracterised in that the film (5′) is clear on its underside.

## Revendications

1. Dispositif indicateur pour véhicules à moteur (1), avec une unité indicatrice, qui est disposée sur le tableau de bord (5) d'un véhicule à moteur (1) et qui se compose d'une multiplicité de sources individuelles de lumière séparées les unes des autres (4₁, 4₂, 4₃, ...), qui forment une grille et se reflètent sur le pare-brise (2) dans le champ de vision de l'utilisateur du véhicule, la position des sources individuelles de lumière (4₁, 4₂, 4₃, ...) étant choisie de telle façon que les prolongements des lignes de collimation (7) partant de l'oeil (3) de l'utilisateur du véhicule et déterminées par les points de réfraction respectifs sur le pare-brise (2) décrivent un champ de trame se trouvant en avant du véhicule à moteur (1), constitué par les sources individuelles de lumière (4₁, 4₂, 4₃, ...) et avec des moyens pour sélectionner de façon appropriée les sources de lumière allumées (4₁, 4₂, 4₃, ...) pour produire une figure géométrique se trouvant à l'intérieur du champ de trame, dispositif indicateur caractérisé en ce que les sources de lumière (4₁, 4₂, 4₃, ...) se trouvent à la surface du tableau de bord (5) et en ce que les positions des sources de lumière (4₁, 4₂, 4₃, ...) les unes par rapport aux autres sont choisies de telle façon que l'utilisateur du véhicule ait l'impression que le champ de trame s'étend dans une direction qui va en s'écartant du véhicule à moteur (1).

2. Dispositif indicateur selon la revendication 1, caractérisé en ce que l'on simule, en faisant varier les sources de lumière allumées (4₁, 4₂, 4₃, ...), un mouvement de la figure à l'intérieur du champ.

3. Dispositif indicateur selon la revendication 1 ou 2, caractérisé en ce que les sources de lumière (4₁, 4₂, 4₃, ...) possèdent, pour les points du champ qui sont à une plus grande distance, une intensité lumineuse et/ou une luminosité plus faible que pour des points lumineux à une distance plus petite.

4. Dispositif indicateur selon l'une des revendications 1 à 3, caractérisé en ce que les sources lumineuses (4₁, 4₂, 4₃, ...) sont recouvertes par une feuille dépolie (5′) sur sa face supérieure.

5. Dispositif indicateur selon la revendication 4, caractérisé en ce que la feuille (5') est claire sur sa face inférieure.
